# EUROPEAN PATENT SPECIFICATION

(11) **EP 3 941 698 B1**
(45) Date of publication and mention of the grant of the patent: **16.07.2025**
(21) Application number: 19891867.4
(22) Date of filing: 22.11.2019
(51) Int. Cl.: B27C 7/00, B23B 1/00, B23Q 11/08, B23Q 11/14, B27C 7/06, B23D 59/00, B23Q 11/00

(54) **A METHOD OF MACHINING LONGITUDINAL WOOD-LIKE COMPONENTS AND A WORKSTAND TO PERFORM THEREOF**
VERFAHREN ZUR BEARBEITUNG VON LÄNGLICHEN HOLZÄHNLICHEN KOMPONENTEN UND ARBEITSSTÄNDER ZUR DURCHFÜHRUNG DAVON
PROCÉDÉ D'USINAGE D'ÉLÉMENTS DE TYPE BOIS LONGITUDINAUX ET BANC DE TRAVAIL Y RELATIF

(30) Priority: 06.12.2018 PL 42809018
(43) Date of publication of application: 26.01.2022
(73) Proprietor: Zorka Sp. z o.o., 58-560 Jelenia Góra (PL)
(72) Inventor: DANILECKI, Boleslaw, 59-830 Olszyna (PL); BOSEK, Tomasz, 59-570 Jelenia Góra (PL)
(74) Representative: Hudy, Ludwik
(86) International application number: PCT/IB2019/060060
(87) International publication number: WO 2020/115599

(56) References cited:
- CN-U- 203 557 272
- CN-U- 204 249 008
- PL-B1- 167 226
- US-A1- 2003 166 399
- US-A1- 2009 120 250

## Description

The object of this invention is a method of machining longitudinal wood-like components according to the preamble of claim 1 and a work stand to perform thereof. Such a method and such a corresponding stand are disclosed by the document US 2009 /120250 A1.

There is known turning of wood components as a method of machining such components as legs of chairs, tables and other furniture. Until recently these components were turned from solid wood. Currently, the possibility of replacing wood components with wood-like materials such as HDF (High Density Fibreboard), MDF (Medium Density Fibreboard), plywood or OSB (Oriented Strand Board) and other. Replacing one raw material such as wood with another one of different physical and chemical characteristics poses a number of technical problems connected with machining of it. From the state of the art and commercial applications, there are known methods of machining fibreboards used for table tops, walls, shelves or other flat surfaces. So far, in fibreboard machining trimming, drilling or milling were used. However, there are no methods of machining fibreboard longitudinal components based on prismatic or cylindrical shape as a starting format for machining. However, such blanks are used in manufacture of furniture legs and supports. There are several technical problems with fibreboard machining that are not present in machining wood components. The first problem resulting from higher densities of fibreboards, especially HDF (740 - 1300 kg/m3 ) or MDF (620 - 740 kg/m3 ), compared to those of wood (dry wood: 490 - 700 kg/m3 ), is faster wearing of cutting tools, for example turning tool blades or rotating disks. As a consequence of higher density is in turn faster heating of cutting tools. An elevated temperature of cutter blade causes in turn accumulation of deposits of glue residues and wood particles on the blade that adhere to the blade, thus, preventing further cutting and destroying the workpiece by tearing it into pieces. At the same time due to the structure of fibreboard, when machining there is much higher dustiness in the workplace compared to that caused by wood, with considerably finer fraction of dusty waste than chips originated from solid wood. Another problem is the specificity of the workpiece. The starting material, so-called blank has the shape of a regular prism or cylinder that is composed of layers being fibreboard blanks. Such lamellar structure of the workpiece causes that outer layers, in particular, in the middle section have a tendency to split off from the core of the machined body, especially at excessive rotational speeds or if the machining tool is blunt.

There is known from patent description PL 176107 the woodworking method and tool. There is known from the mentioned disclosure the preheating treatment of the machined wood layer during turning to gain higher strength.

There is known from patent description US20090120250A1 the Precision roll turning lathe. The precision roll turning lathe which can perform machining of fine grooves at a dramatically higher speed as compared to conventional roll turning lathes, thus significantly shortening time taken for machining one groove. The precision roll turning lathe includes: a bed; a headstock, mounted on the bed, having a main spindle for rotating a roll as a workpiece while holding one end of the roll by means of a chuck; a tail stock, mounted on the bed and disposed opposite the headstock, for rotatably supporting the other end of the roll; a carriage including a saddle mounted on the bed movably in the longitudinal direction of the roll, and a table mounted on the saddle movably in a direction perpendicular to the longitudinal direction of the roll; and an air slide apparatus, mounted on the table, including a guide rail extending parallel to the roll in the longitudinal direction, an air slider having a diamond tool, capable of traveling in a floating state on the guide rail, and a linear motor for driving the air slider.

The purpose of this invention is to solve the problem related to machining of wood-like board blanks. Consequently, more specific purpose is to prevent splitting of chip bodies during machining to maintain sharpness of the turning tool and to solve the problem with excessive dustiness at the workplace.

The substance of the machining of wood-like longitudinal components according to the invention consists in turning a chip blank that initially is in the shape of a regular prism, at rotational speed in the range from 1,000 to 6,000 rpm by using a machining tool, preferably a turning tool, comprising at least one blade having a hardened cutting edge, wherein the turning tool blades are cooled individually with airflow and dust and chips are sucked in continuously during turning. When turning, each cutter blade is cooled individually with cold airflow at temperature not greater than 15°C. Preferably, airflow is oriented towards the upper part of the blades near to the radius along which the blade is working. The workpiece is inserted into a holder in the form of a clamp that is connected to a protective element in the form of a throat suction cup being also a guard covering all cutter blades during turning. The holder together with the suction cup and the machining tool assembly move along the workpiece (blank), covering the blank over at least ½ of its cross section. During turning, the dust collection system is running and vacuum in the space between the workpiece and the guard is not less than 5 m/s and not greater that 40 m/s.

The stand for machining wood-like longitudinal components by using the method according to the invention consists of a lathe containing a machining tool, a dust extraction system, a hood and a cooling system based on cold air blowing. The machine is distinguished by the fact that the wood-like blank machining tool contains at least one blade fitted with a hardened cutting edge. In turn, the cooling system comprises individual cold air outlet nozzles in the amount of not less than the number of the machining tool cutting blades. Wherein, each nozzle is oriented towards the upper part of corresponding cutting blade to the area of the first contact of the cutting edge with the blank. And the dust extraction system consists of a protecting element in the form of a throat suction cup covering at least ½ of its cross section. The suction cup rear end (outlet) is connected to a suction pipe. To enable suction cup movement along the workpiece, the front part of the suction cup is connected to the ring holder that in turn is mounted on the movable guide carriage moving reciprocally along the guide parallel to the lathe axis. The guide carriage is provided with a movable parallel slide to which the machining tool is connected with the cross slide. The carriage or parallel slides by moving on the guide rail along the workpiece allow the machining tool blades to be moved along the blank longitudinal axis. In turn, the carriage or parallel slides allow the blade position to be changed along the traversal axis of the workpiece. Preferably, the stand for machining wood-like longitudinal components according to the invention is characterized in that the machining tool is a set of turning tools consisting of at least one coarse blade and at least one intermediate blade and at least one finishing blade.

In an embodiment the stand for machining wood-like longitudinal components is provided with a protecting element placed above the workpiece and consisting of a throat suction cup connected with the cutting blade guards. The machining tool cutting blades in the embodiment with a turning tool are not arranged parallel to the vertical axis of the blank, but they are slightly convergent. The upper blade part is closer to the blank than the lower part.

It is obvious to one skilled in the art that the machining tool can be both a turning tool fitted with fixed blades and the machining tool may have rotating components such as cutting disk or saw milling cutter.

The method according to the invention is explained in more detail based on an example of embodiment shown in figures below, where:

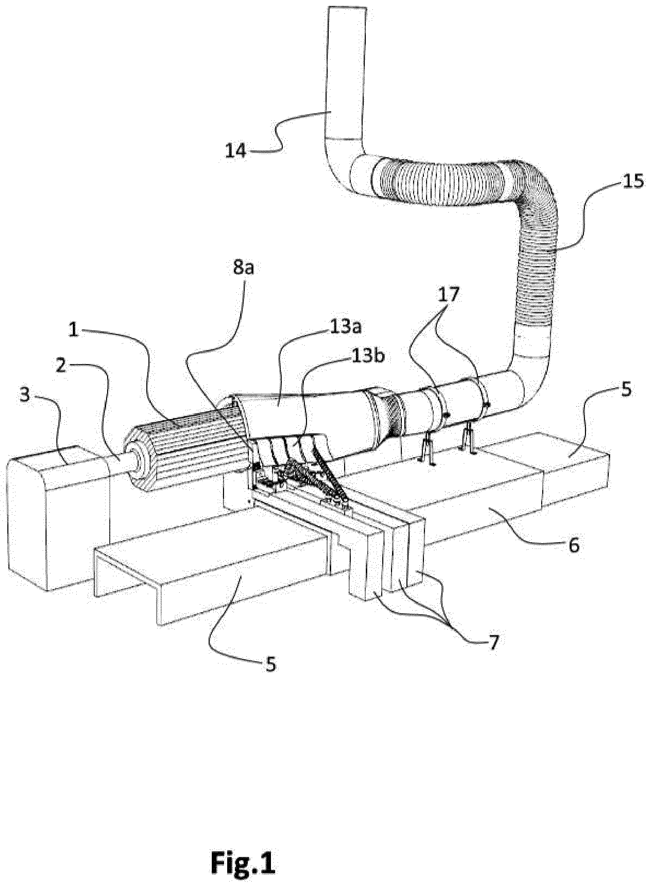

Fig. 1 shows a general view of the stand for performing the method of machining of wood-like longitudinal components in a spatial arrangement viewed on the side of turning tool bits.

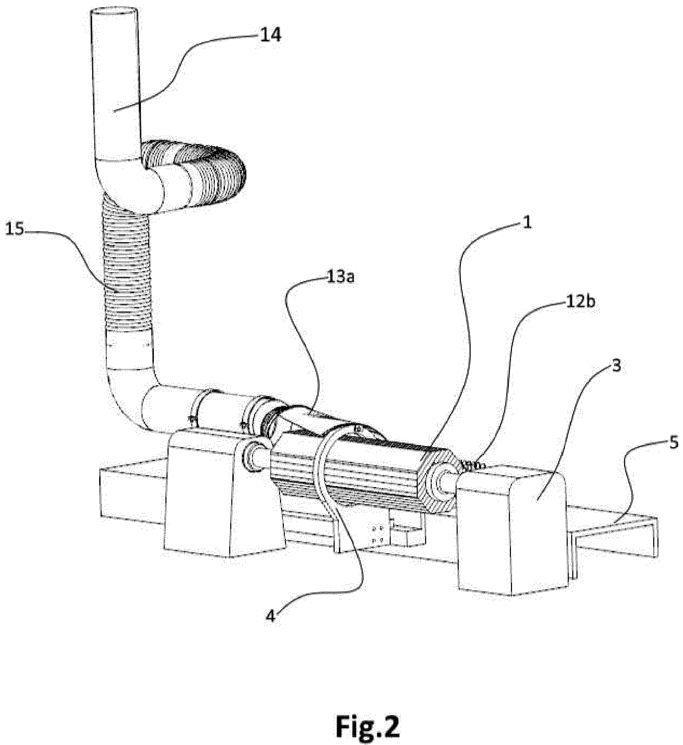

Fig. 2 shows a general view of the stand for performing the method of machining of wood-like longitudinal components in a spatial arrangement viewed on the side of the workpiece and the holder.

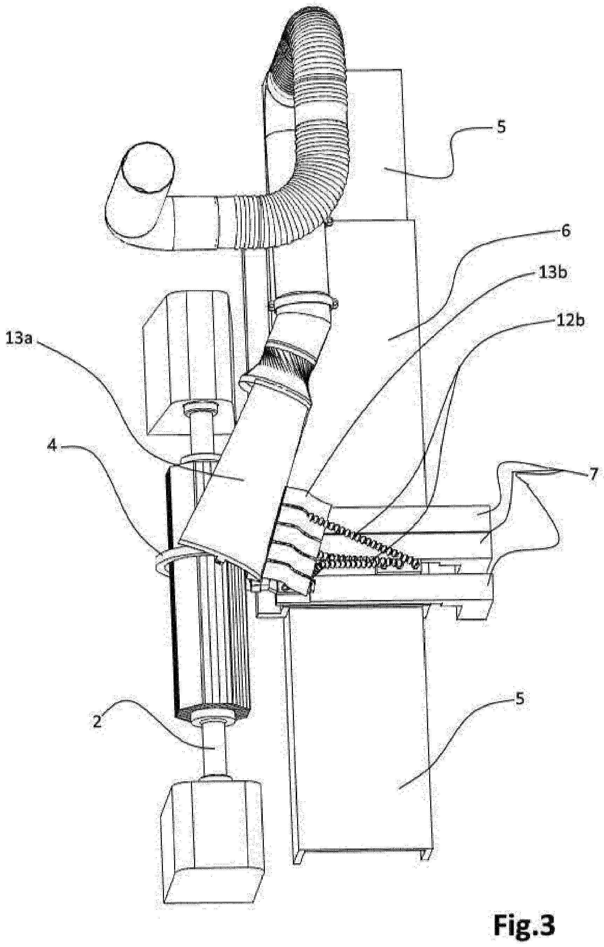

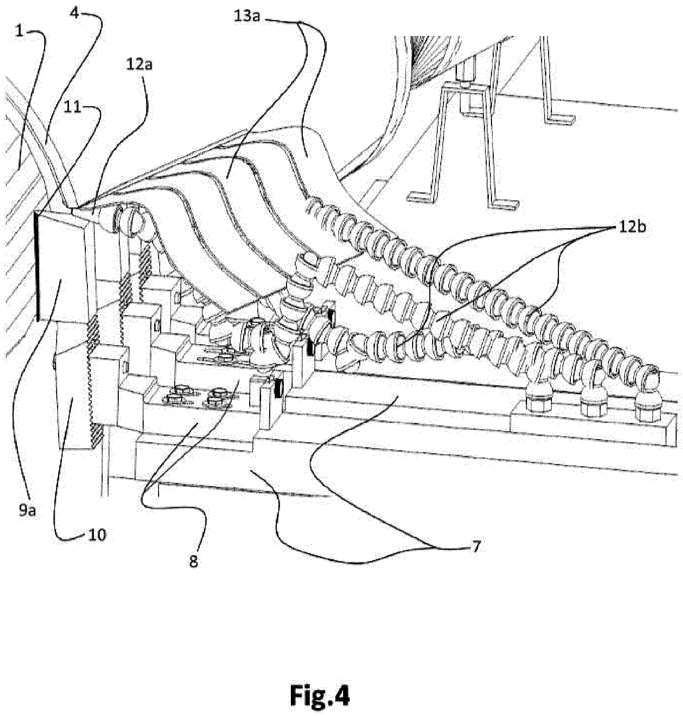

Fig. 3 shows a top view of the stand. Fig. 4 shows an enlarged view of the turning tool blade assembly and protecting elements.

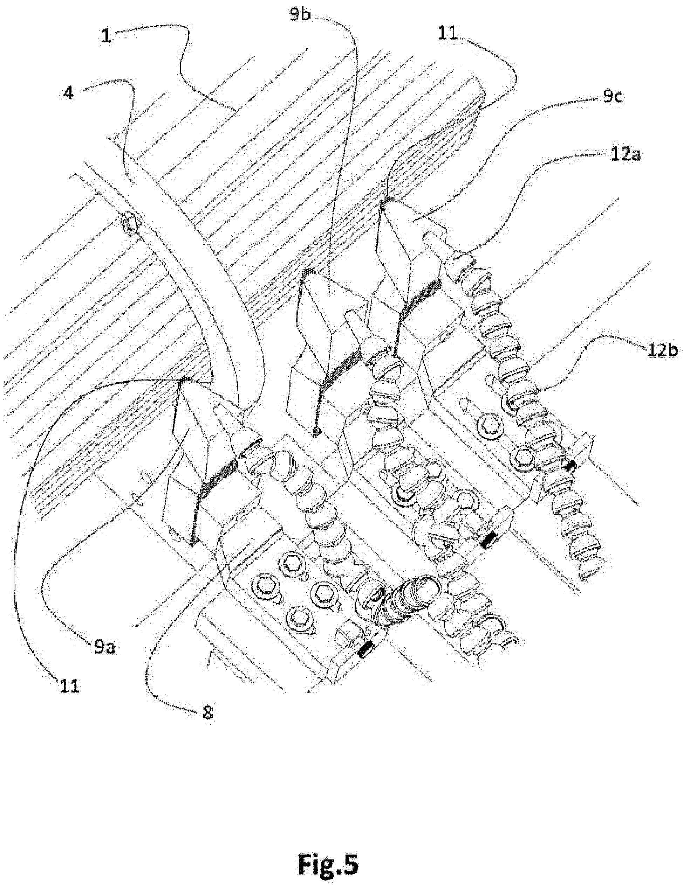

Fig. 5 shows an enlarged view of the turning tool blade assembly and the cooling outlet nozzles.

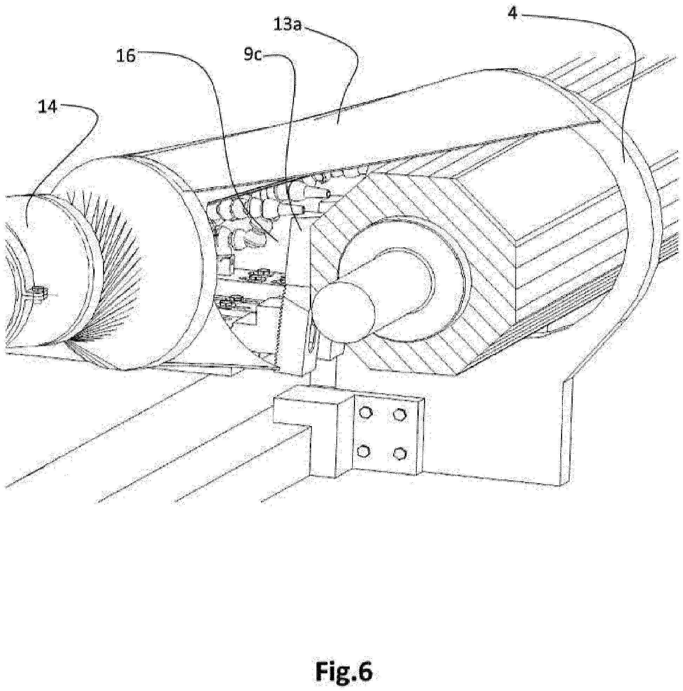

Fig. 6 shows the rear view of the stand with the exposed suction unit.

In the embodiment the machined blank 1 is made of glued laminated chip boards and has the initial shape of a regular prism. The blank 1 is mounted horizontally in the chuck 2 of the lathe 3 and is inserted into the holder 4 in the form of an eyepiece. Then the blank 1 is rotated until its rotational speed reaches 5,100 rpm, after which the movable three-blade turning tool assembly is applied. The positions of individual turning tool blades are set by moving along the guide 5 the guide carriage 6 and positioning the parallel carriages 7 and perpendicular slides 8 on which individual blades 9a, 9b, 9c are mounted. The blades 9a, 9b, 9c are positioned by moving the parallel slides 7 and perpendicular slides 8 mounted on them. The blades 9a, 9b, 9c may be controlled by using an appropriate CNC lathe program. Individual blades 9a, 9b, 9c are mounted on separate holders 10. The parallel slides 7 move the blades 9a, 9b, 9c along the blank 1. The perpendicular slides 8 mounted on them, in turn, move the blades 9a, 9b, 9c away from or towards the blank 1, being capable of moving perpendicularly to the blank 1 on the parallel slides 7. The position of individual blades 9a, 9b, 9c during turning is predefined in the machine control program. Each of blades 9a, 9b, 9c is fitted with a hardened cutting edge 11 in the form of diamond layer 11. Cutting is carried out with continuous and individual cooling of each cutting blades 9a, 9b, 9c by blowing cold air at a temperature not exceeding 10°C at the outlets of the nozzles 12a. The cold air stream is supplied from a compressor through flexible pneumatic hoses 12b. During turning the blank 1 is covered with the throat suction cup hood 13a having the form of a cone section. The suction cup hood 13a is mounted from the inlet up to the holder clamp 4 and on the other side to the inlet of the suction pipe 14. The suction cup hood 13a is connected to individual guards 13b covering all the blades 9a, 9b, 9c, wherein during turning the holder 4 together with the suction cup 13a are moved along the machined blank 1, covering 2 of its perimeter throughout turning. Reciprocating motion of the suction cup 13a, moving together with entire turning tool assembly and the cooling system 12a, 12b is possible due to installation of an exhaust flexible hose section 15 on the route of the suction pipe 15, to compensate for position changes of the suction cup 13a. When turning the dust extraction system is running all the time and vacuum in the space 16 between the turned workpiece 1 and the suction cup hood 13a is 19 m/s. The suction pipe is stabilized by two brackets 17 attached to the guide carriage 6.

The machining process described above as well as the design of the stand to perform this process according to the invention should not to be construed as being limited only to the presented embodiment. In particular, it is obvious to one skilled in the art that the machining tool can be a turning tool containing blades in the amount differing from that indicated in this embodiment and having another types of blade finishing and hardened edge. The substitute of a fixed blade may be movable saw or blade, and the present invention may be achieved by using at least one unit with a rotating tool, for example a saw milling cutter as a machining tool.

An advantage of the solution according to the invention is provision of precise turning of wood-like components without the risk of damaging or destroying during turning due to blunt or overheated blades of the turning tool.

### List of components:

1. Blank;
2. Lathe chuck;
3. Lathe;
4. Holder (clamp);
5. Guide rail (guide);
6. Guide carriage;
7. Parallel slide;
8. Perpendicular (traverse) slide;
9. Blades;
a. Coarse blade; b. Intermediate blade;
c. Finishing blade;
10. Holders;
11. Hardened cutting edge;
12. Cooling;
a. Outlet nozzles; b. Pneumatic hoses
13. Protecting element;
a. Throat (suction cup) b. Blade guards
14. Suction pipe;
15. Exhaust flexible hose;
16. Vacuum area;
17. Brackets;

## Claims

1. The method of machining wood-like longitudinal components where a wood-like blank (1) that is initially in the form of a regular prism is turned at a rotational speed not lower than 1000 rpm and not higher than 6000 rpm, by using a machining tool containing at least one blade (9a) provided with a hardened cutting edge (11),
**characterized in that** each cutting blade (9a), (9b), (9c) of the machining tool is individually cooled during turning with cold air stream at a temperature not exceeding 15° C; and the machined blank (1) is inserted into a clamping holder (4) that is connected to the suction cup hood (13a) covering top of the blank (1) and all the cutting blades (9a), (9b), (9c), the holder (4) and the suction cup (13a) are moving along the blank (1), covering the blank (1) at least over half of its perimeter, and at the same time the dust extraction system is running during turning creating vacuum in the space between the blank (1) and the throat of the suction cup (13a) in the range of 11-35 m/s.

2. The stand for machining of wood-like longitudinal components by using the method according to claim 1, consisting of a lathe containing a machining tool; dust extraction; hood and cooling system based on air blowing **characterized in that** the machining tool comprises at least one cutting blade (9a), (9b), (9c) fitted with a hardened cutting edge (11) and the cooling system contains individual cold air outlet nozzles (12a) in the amount of not less than the number of cutting blades (9a), (9b), (9c), oriented towards the upper part of cutting blades (9a), (9b), (9c) and the protecting element consists of the throat suction cup (13a) covering the blank (1) at least over ½ of its cross section, and its outlet is connected to the suction pipe (14) and the inlet of the suction cup (13a) is connected to the clamping holder (4) that, in turn, is mounted on the movable guide carriage (6) mounted on the guide rail (5) arranged parallel to the lathe longitudinal axis (3).

3. The stand for machining wood-like longitudinal components according to claim 2 **characterized in that** the machining tool is composed of a set of fixed turning tools consisting of at least one coarse blade (9a) and at least one intermediate blade (9b) and at least one finishing blade (9c).

4. The stand for machining wood-like longitudinal components according to claim 2 **characterized in that** the suction cup (13a) is connected to the guards (13b) of the cutting blades (9a), (9b), (9c).

5. The stand for machining wood-like longitudinal components according to claim 2 **characterized in that** the hardened cutting edge (11) is a diamond layer.

6. The stand for machining wood-like longitudinal components according to claim 2 **characterized in that** the hardened cutting edge (11) is a sintered carbide plate.

## Patentansprüche

1. Verfahren zum Bearbeiten von holzartigen Längskomponenten, wobei ein holzartiger Rohling (1), der anfangs in der Form eines regelmäßigen Prismas ist, mit einer Drehzahl von nicht weniger als 1000 U/min und nicht mehr als 6000 U/min gedreht wird, indem ein Zerspanungswerkzeug verwendet wird, das mindestens eine Klinge (9a) enthält, die mit einer gehärteten Schneidkante (11) versehen ist,
**dadurch gekennzeichnet, dass** jede Schneidklinge (9a), (9b), (9c) des Zerspanungswerkzeugs beim Drehen einzeln mit einem Kaltluftstrom bei einer Temperatur von nicht mehr als 15° C gekühlt wird und dass der bearbeitete Rohling (1) in einen Einspannhalter (4) eingesetzt ist, der mit der Saugnapfhaube (13a) verbunden ist, die den Rohling (1) und alle Schneidklingen (9a), (9b), (9c) abdeckt, wobei der Halter (4) und der Saugnapf (13a) sich entlang des Rohlings (1) bewegen und den Rohling (1) mindestens über die Hälfte seines Umfangs bedecken, und gleichzeitig das Staubabzugssystem beim Drehen läuft und in dem Raum zwischen dem Rohling (1) und der Kehle des Saugnapfs (13a) einen Unterdruck in einem Bereich von 11-35 m/s erzeugt.

2. Ständer zum Bearbeiten von holzartigen Längskomponenten durch Verwenden des Verfahrens nach Anspruch 1, bestehend aus einer Drehmaschine, die ein Zerspanungswerkzeug enthält, einem Staubabzug, einer Haube und einem auf Luftgebläse basierendes Kühlsystem, **dadurch gekennzeichnet, dass** das Zerspanungswerkzeug mindestens eine Schneidklinge (9a), (9b), (9c) umfasst, die mit einer gehärteten Schneidkante (11) versehen ist, und das Kühlsystem einzelne Kaltluftauslassdüsen (12a) in der Anzahl enthält, die nicht geringer ist als die Anzahl der Schneidklingen (9a), (9b), (9c), die auf den oberen Teil der Schneidklingen (9a), (9b), (9c) ausgerichtet sind und das Schutzelement aus dem Kehlensaugnapf (13a) besteht, der den Rohling (1) mindestens über 1/2 seines Querschnitts bedeckt und dessen Auslass mit dem Saugrohr (14) verbunden ist und der Einlass des Saugnapfs (13a) mit dem Einspannhalter (4) verbunden ist, der seinerseits auf dem bewegbaren Führungsschlitten (6) montiert ist, der auf der parallel zu der Längsachse der Drehmaschine (3) angeordneten Führungsschiene (5) montiert ist.

3. Ständer zum Bearbeiten von holzartigen Längskomponenten nach Anspruch 2, **dadurch gekennzeichnet, dass** das Zerspanungswerkzeug aus einem Satz feststehender Drehwerkzeuge zusammengesetzt ist, der aus mindestens einer Grobklinge (9a) und mindestens einer Zwischenklinge (9b) und mindestens einer Fertigbearbeitungsklinge (9c) besteht.

4. Ständer zum Bearbeiten von holzartigen Längskomponenten nach Anspruch 2, **dadurch gekennzeichnet, dass** der Saugnapf (13a) mit den Schutzvorrichtungen (13b) der Schneidklingen (9a), (9b), (9c) verbunden ist.

5. Ständer zum Bearbeiten von holzartigen Längskomponenten nach Anspruch 2, **dadurch gekennzeichnet, dass** die gehärtete Schneidkante (11) eine Diamantschicht ist.

6. Ständer zum Bearbeiten von holzartigen Längskomponenten nach Anspruch 2, **dadurch gekennzeichnet, dass** die gehärtete Schneidkante (11) eine gesinterte Hartmetallplatte ist.

## Revendications

1. Procédé d'usinage de composants longitudinaux de type bois où une ébauche de type bois (1) qui est initialement sous la forme d'un prisme régulier est tournée à une vitesse de rotation non inférieure à 1000 tr/min et non supérieure à 6000 tr/min, au moyen d'un outil d'usinage contenant au moins une lame (9a) munie d'une arête de coupe durcie (11),
**caractérisé en ce que** chaque lame de coupe (9a), (9b), (9c) de l'outil d'usinage est refroidie individuellement pendant le tournage avec un flux d'air froid à une température ne dépassant pas 15 °C et l'ébauche usinée (1) est insérée dans un support de serrage (4) qui est relié au capot de ventouse (13a) recouvrant le dessus de l'ébauche (1), et toutes les lames de coupe (9a), (9b), (9c), le support (4) et la ventouse (13a) se déplacent le long de l'ébauche (1), recouvrant l'ébauche (1) sur au moins la moitié de son périmètre, et en même temps le système d'extraction de poussière fonctionne pendant le tournage de manière à créer un vide dans l'espace entre l'ébauche (1) et la gorge de la ventouse (13a) dans la plage de 11 à 35 m/s.

2. Support pour l'usinage de composants longitudinaux de type bois au moyen du procédé selon la revendication 1, consistant en un tour contenant un outil d'usinage, un extracteur de poussière, une hotte et un système de refroidissement basé sur le soufflage d'air, **caractérisé en ce que** l'outil d'usinage comprend au moins une lame de coupe (9a), (9b), (9c) munie d'une arête de coupe durcie (11) et le système de refroidissement contient des buses de sortie d'air froid individuelles (12a) en une quantité non inférieure au nombre de lames de coupe (9a), (9b), (9c), orientées vers la partie supérieure des lames de coupe (9a), (9b), (9c), et l'élément de protection consiste en la ventouse à gorge (13a) recouvrant l'ébauche (1) sur au moins 1/2 de sa section transversale, et sa sortie est reliée au tuyau d'aspiration (14) et l'entrée de la ventouse (13a) est reliée au support de serrage (4) qui, à son tour, est monté sur le chariot de guidage mobile (6) monté sur le rail de guidage (5) agencé parallèlement à l'axe longitudinal de tour (3).

3. Support pour l'usinage de composants longitudinaux de type bois selon la revendication 2, **caractérisé en ce que** l'outil d'usinage est composé d'un ensemble d'outils de tournage fixes consistant en au moins une lame grossière (9a) et au moins une lame intermédiaire (9b) et au moins une lame de finition (9c).

4. Support pour l'usinage de composants longitudinaux de type bois selon la revendication 2, **caractérisé en ce que** la ventouse (13a) est raccordée aux protections (13b) des lames de coupe (9a), (9b), (9c).

5. Support pour l'usinage de composants longitudinaux de type bois selon la revendication 2, **caractérisé en ce que** l'arête de coupe durcie (11) est une couche de diamant.

6. Support pour l'usinage de composants longitudinaux de type bois selon la revendication 2, **caractérisé en ce que** l'arête de coupe durcie (11) est une plaque de carbure fritté.
